# EUROPÄISCHE PATENTSCHRIFT

(11) **EP 3 116 758 B1**
(45) Veröffentlichungstag und Bekanntmachung des Hinweises auf die Patenterteilung: **23.10.2019**
(21) Anmeldenummer: 14821537.9
(22) Anmeldetag: 12.12.2014
(51) Int. Cl.: B60T 13/74

(54) **KALIBRIERVERFAHREN FÜR EINE ELEKTROHYDRAULISCHE KRAFTFAHRZEUG-BREMSANLAGE UND KALIBRIERVORRICHTUNG HIERFÜR**
CALIBRATION METHOD FOR AN ELECTRO-HYDRAULIC MOTOR VEHICLE BRAKING SYSTEM AND ASSOCIATED CALIBRATION DEVICE
PROCÉDÉ D'ÉTALONNAGE D'UN SYSTÈME DE FREINAGE ÉLECTROHYDRAULIQUE DE VÉHICULE AUTOMOBILE ET DISPOSITIF D'ÉTALONNAGE

(30) Priorität: 14.03.2014 DE 102014003641
(43) Veröffentlichungstag der Anmeldung: 18.01.2017
(73) Patentinhaber: Lucas Automotive GmbH, 56070 Koblenz (DE)
(72) Erfinder: ADLER, Vanessa, 56179 Niederwerth (DE); SCHLAFKE, Kay, 65623 Hahnstaetten (DE); NAETHER, Niko, 56355 Nastaetten (DE); SCHAUST, Karlheinz, 56133 Fachbach (DE)
(74) Vertreter: Röthinger, Rainer
(86) Internationale Anmeldenummer: PCT/EP2014/077496
(87) Internationale Veröffentlichungsnummer: WO 2015/135608

(56) Entgegenhaltungen:
- DE-A1-102010 001 037
- DE-A1-102010 045 617
- US-A- 5 558 409

## Beschreibung

### Technisches Gebiet

Die vorliegende Offenbarung betrifft allgemein das Gebiet elektrohydraulischer Kraftfahrzeug-Bremsanlagen. Konkret wird ein Kalibrierverfahren für die in einer solchen Bremsanlage verbaute Sensorik angegeben.

### Hintergrund

Aus der DE 10 2011 116 167 A1 ist eine elektrohydraulische Kraftfahrzeug-Bremsanlage bekannt, die eine Hauptzylinder-Baugruppe mit einem Hauptzylinder und einem darin verschieblich aufgenommenen Kolben umfasst. Eine Betätigung des Kolbens bewirkt eine Bremsdruckänderung (z.B. einen Bremsdruckaufbau) an mit dem Hauptzylinder fluidisch gekoppelten Radbremsen.

Zur Betätigung des Kolbens sind zwei Aktuatoren vorgesehen, die auf eine eingangsseitige Stirnfläche des Kolbens einzuwirken vermögen. Der erste Aktuator umfasst einen Elektromotor und ein diesem nachgeschaltetes Getriebe zur Bremsdruckänderung im Rahmen eines "Brake-By-Wire", BBW-, Betriebs. Der zweite Aktuator gestattet einen mechanischen "Durchgriff" auf den Kolben in einem Notbremsbetrieb der Bremsanlage. Zu diesem Zweck besitzt der zweite Aktuator eine Bremspedalschnittstelle, damit eine am Bremspedal aufgebrachte Kraft über ein stangenförmiges Betätigungsglied unmittelbar in den Kolben eingeleitet werden kann. Im regulären BBW-Betrieb ist das Bremspedal hingegen vom Kolben entkoppelt.

Zur Entkoppelung des Bremspedals vom Kolben ist in einem Kraftübertragungsweg zwischen dem Bremspedal und dem Kolben ein Spalt vorgesehen. Der Spalt wird aufrechterhalten, während der Kolben mittels des ersten Aktuators verschoben wird und das stangenförmige Betätigungsglied des zweiten Aktuators unter dem Einfluss der Bremspedalbewegung dem Kolben nacheilt.

Um einen zuverlässigen BBW-Betrieb gewährleisten zu können, ist es von großer Bedeutung, dass der Spalt stets eine ausreichende Breite aufweist. Die Spaltbreite muss groß genug sein, um auch auf dynamische Pedalbetätigungen schnell reagieren zu können, ohne dass das Betätigungsglied jedoch in eine kraftübertragende Anlage an den Kolben gelangt.

Zur Aufrechterhaltung des Spalts im Kraftübertragungsweg zwischen dem Bremspedal und dem Kolben werden im BBW-Betrieb mittels einer Sensorik Zustandsänderungen des zweiten Aktuators ermittelt. Genauer gesagt wird die vom Ausmaß der Pedalbetätigung abhängige Position einer Komponente des zweiten Aktuators (bzw. des Bremspedals) fortlaufend sensorisch erfasst. Basierend auf der Positionserfassung wird dann der Elektromotor des ersten Aktuators derart angesteuert, dass durch Verschieben des Kolbens der angeforderte Bremsdruck erzeugt und gleichzeitig eine ausreichende Spaltbreite aufrechterhalten werden kann.

Es versteht sich, dass die Zuverlässigkeit dieser Positionserfassung einen großen Einfluss auf die Funktionssicherheit der Bremsanlage im BBW-Betrieb besitzt. Aus diesem Grund ist die Funktionsfähigkeit - und insbesondere die Genauigkeit - der für die Positionserfassung verwendeten Sensorik von herausragender Bedeutung. Da ferner die Aufrechterhaltung einer ausreichenden Spaltbreite eine Ansteuerung des Elektromotors erfordert, muss auch die für den ersten Aktuator (z.B. für Ansteurrungs- oder Überprüfungszwecke) vorhandene Sensorik höchsten Genauigkeitsanforderungen genügen.

Es versteht sich, dass Genauigkeitsanforderungen an die Sensorik der hier betrachteten Bremsanlage ganz allgemein gelten und nicht auf die exemplarisch erörterte Aufrechterhaltung einer ausreichenden Spaltbreite beschränkt sind.

Aus der DE 10 2010 045 617 A1 ist eine Betätigungsvorrichtung für eine Fahrzeug-Bremsanlage mit einer ersten Kolben-Zylinder-Einheit bekannt, deren mindestens einer Arbeitsraum über zumindest eine Hydraulikleitung mit mindestens einer Radbremse des Fahrzeugs zu verbinden ist. Ferner umfasst die Betätigungsvorrichtung eine elektro-mechanische Antriebseinrichtung und eine Betätigungseinrichtung, insbesondere ein Bremspedal. Die Betätigungsvorrichtung weist eine weitere Kolben-Zylinder-Einheit auf, deren Kolben mittels der Betätigungseinrichtung betätigbar ist und der über eine Verbindungseinrichtung mit einem Kolben der ersten Kolben-Zylinder-Einheit verbunden ist.

### Kurzer Abriss

Es ist ein Kalibrierverfahren für die Sensorik einer elektrohydraulischen Kraftfahrzeug-Bremsanlage anzugeben, das eine ausreichende Genauigkeit eines von der Sensorik erzeugten Signals gewährleistet. Ferner ist eine entsprechende Kalibriervorrichtung anzugeben.

Gemäß einem Aspekt wird ein Kalibrierverfahren für eine elektrohydraulische Kraftfahrzeug-Bremsanlage angegeben, die einen Kolben zum Aufbau eines Hydraulikdrucks in der Bremsanlage, einen ersten Aktuator mit einem Elektromotor und einen zweiten Aktuator mit einer Bremspedalschnittstelle umfasst. Der erste Aktuator und der zweite Aktuator vermögen den Kolben zu betätigen, wobei eine erste Sensorik eine Zustandsänderung des ersten Aktuators und eine zweite Sensorik eine Zustandsänderung des zweiten Aktuators zu erfassen vermögen. Das Kalibrierverfahren umfasst ein Ansteuern des Elektromotors, um den Kolben mittels des ersten Aktuators zu betätigen, wobei der zweite Aktuator der Kolbenbetätigung folgt, ein Erfassen, während der Kolbenbetätigung, eines von der ersten Sensorik erzeugten ersten Signals, das einen Rückschluss auf ein Ausmaß der Kolbenbetätigung gestattet, sowie eines von der zweiten Sensorik erzeugten zweiten Signals, und ein Kalibrieren des ersten Signals auf der Grundlage des zweiten Signals, oder umgekehrt.

Jede Sensorik kann einen oder mehrere Sensoren umfassen. Jeder Sensor wiederrum kann einen ein- oder mehrteiligen Aufbau besitzen. So kann ein Wegsensor beispielsweise zwei relativ zueinander bewegliche Teile enthalten. Des Weiteren kann von jeder Sensorik eine Signalaufbereitungsschaltung oder eine Signalauswertungsschaltung umfasst sein.

Während des Ansteuerns des Elektromotors kann eine Hilfskraft an den zweiten Aktuator angelegt werden, unter welcher der zweite Aktuator der Kolbenbetätigung folgt. Eine solche Vorgehensweise kann dann zweckmäßig sein, wenn der zweite Aktuator nur lose mit dem Kolben gekoppelt oder koppelbar ist (z. B. an diesem anliegt), aber auch in anderen Fällen. Die Hilfskraft kann beispielsweise an eine Bremspedalschnittstelle oder eine mit der Bremspedalschnittstelle gekoppelte Komponente des zweiten Aktuators (zum Beispiel ein Bremspedal) angelegt werden.

Die Bremsanlage kann in einem BBW-Modus oder einem anderen Modus (zum Beispiel einem Bremskraftverstärkungsmodus) betreibbar sein. Im BBW-Modus kann in einem Kraftübertragungsweg zwischen der Pedalschnittstelle und dem Kolben ein Spalt vorgesehen oder vorsehbar sein, um den zweiten Aktuator vom Kolben zu entkoppeln. Durch die an den zweiten Aktuator angelegte Hilfskraft kann der Spalt überwunden oder eine Ausbildung des Spalts unterbunden werden.

Allgemein kann die zweite Sensorik eine Zustandsänderung eines Teils des zweiten Aktuators zu erfassen vermögen, der auf einer dem Kolben gegenüberliegenden Seite des Spalts liegt. Beispielsweise kann die zweite Sensorik eine Zustandsänderung der Bremspedalschnittstelle oder einer damit gekoppelten Komponente des zweiten Aktuators (zum Beispiel des Bremspedals) zu erfassen vermögen.

Es ist darauf hinzuweisen, dass das Vorsehen eines Spalts ein optionales Merkmal ist und beispielsweise in einem Bremskraftverstärkungsmodus der Bremsanlage nicht vorgesehen zu sein braucht. Im Bremskraftverstärkungsmodus wird eine mittels des zweiten Aktuators vom Fahrer in den Kolben eingeleitete Betätigungskraft mittels des ersten Aktuators verstärkt. Mit anderen Worten wirken in diesem Modus sowohl der erste Aktuator als auch der zweite Aktuator gleichzeitig auf den Kolben ein.

Während der Kolbenbetätigung kann eine Änderung des zweiten Signals erfasst werden. Das Kalibrieren des zweiten Signals kann dabei die Änderung des zweiten Signals auf das durch das erste Signal angegebene Ausmaß der Kolbenbetätigung (und damit auf das Ausmaß der Betätigung des dem Kolben folgenden zweiten Aktuators) beziehen. Allgemein kann das Ausmaß der Kolbenbetätigung durch einen vom Kolben (und dem diesen folgenden zweiten Aktuator) zurückgelegten Weg angegeben sein.

Das erste Signal kann eine im Wesentlichen lineare Charakteristik besitzen. So kann eine lineare Abhängigkeit eines Pegels des ersten Signals vom Ausmaß der Kolbenbetätigung (beispielsweise von dem vom Kolben zurückgelegten Weg) bestehen. Das zweite Signal kann eine im Wesentlichen nicht-lineare Charakteristik besitzen. So kann eine nicht-lineare Abhängigkeit eines Pegels des zweiten Signals vom Ausmaß der Kolbenbetätigung bestehen.

Allgemein kann das zweite Signal auf der Grundlage des ersten Signals kalibriert werden. So kann der Pegel des zweiten Signals auf das durch den Pegel des ersten Signals angegebene Ausmaß der Kolbenbetätigung bezogen werden. Wird das Ausmaß der Kolbenbetätigung beispielsweise in Gestalt eines vom Kolben (und des diesem folgenden zweiten Aktuators) zurückgelegten Wegs angegeben, kann ein bestimmter Pegel des zweiten Signals auf den zurückgelegen Weg bezogen und damit kalibriert werden.

Der Kolben kann einen (beispielsweise baulich bedingten) Maximalhub aufweisen. In einem solchen Fall kann der Elektromotor angesteuert werden, damit der Kolben im Wesentlichen den Maximalhub ausführt. So kann der Elektromotor beispielsweise derart angesteuert werden, dass der Kolben 70% oder mehr des Maximalhubs ausführt.

Das erste Signal und das zweite Signal können erfasst werden, während der Elektromotor in zwei entgegengesetzte Richtungen angesteuert wird. Auf diese Weise lässt sich im Rahmen der Kalibrierung eine Hysterese oder ein anderer Effekt berücksichtigen. Beispielsweise kann die Kalibrierung separat für entgegengesetzte Betätigungsrichtungen des Kolbens durchgeführt werden.

Der Elektromotor kann ein bürstenloser Motor sein. Es sind jedoch auch andere Realisierungen des Elektromotors denkbar.

Die erste Sensorik kann eine Zustandsänderung des Elektromotors (beispielsweise einen überstrichenen Drehwinkel des Elektromotos oder eine Anzahl von zurückgelegten Umdrehungen des Elektromotors) erfassen. Alternativ oder zusätzlich hierzu kann die erste Sensorik eine Zustandsänderung einer von dem ersten Aktuator umfassten Getriebekomponente, die funktional zwischen dem Elektromotor und dem Kolben vorgesehen ist, erfassen. Die Zustandsänderung der Getriebekomponente kann beispielsweise durch einen überstrichenen Drehwinkel, eine Anzahl von zurückgelegten Umdrehungen oder die Länge einer Translationsbewegung gegeben sein.

Die von der ersten Sensorik erfasste Zustandsänderung kann allgemein in einen vom Kolben (oder diesem folgenden zweiten Aktuator) zurückgelegten Weg umgerechnet werden. Eine Kalibrierung des zweiten Signals kann dann auf der Grundlage des zurückgelegten Wegs erfolgen.

In Bezug auf die zweite Sensorik sind unterschiedliche Ausgestaltungen denkbar, die miteinander kombinierbar sind.

Gemäß einer ersten Variante umfasst die zweite Sensorik wenigstens einen Wegsensor, wobei dieser Wegsensor kalibriert wird. Der Wegsensor kann wenigstens eines der folgenden Elemente umfassen: einen Hall-Sensor, einen Magneten und ein Potentiometer. Der Wegsensor kann dazu ausgelegt sein, einen Betätigungsweg des zweiten Aktuators oder eines Teils des zweiten Aktuators zu erfassen. Beispielsweise kann der zweite Aktuator ein Bremspedal umfassen und der Wegsensor dazu ausgelegt sein, einen Betätigungsweg des Bremspedals zu erfassen.

Gemäß einer weiteren Variante kann die zweite Sensorik wenigstens einen Drucksensor (zum Beispiel zusätzlich zu einem Wegsensor) umfassen, wobei der Drucksensor kalibriert wird. Wenn der zweite Aktuator einen Hydraulikkreis umfasst, kann der Drucksensor beispielsweise dazu ausgebildet sein, einen Hydraulikdruck im Hydraulikkreis des zweiten Aktuators zu erfassen.

Gemäß einer dritten Variante kann die zweite Sensorik wenigstens einen Kraftsensor (zum Beispiel zusätzlich zu einem Wegsensor und/oder einem Drucksensor) umfassen, wobei der Kraftsensor kalibriert wird. Der Kraftsensor kann dazu ausgebildet sein, eine von einem Fahrer an der Bremspedalschnittstelle aufgebrachte Kraft zu erfassen. Die Kraft wird vom Fahrer mittels des Bremspedals in die Bremspedalschnittstelle eingeleitet.

Das Kalibrierverfahren kann vor einem Einbau der Bremsanlage in ein Kraftfahrzeug durchgeführt werden. Beispielsweise kann das Kalibrierverfahren Teil eines End-of-Line-Tests sein. Zusätzlich oder alternativ hierzu kann das Kalibrierverfahren in einem hydraulikfluidlosen Zustand der Bremsanlage durchgeführt werden. Es wäre jedoch auch denkbar, das Kalibrierverfahren im eingebauten Zustand der Bremsanlage durchzuführen.

Ebenfalls bereitgestellt wird ein Computerprogramm mit Programmcode zum Durchführen des hier vorgestellten Kalibrierverfahrens, wenn das Computerprogramm von einer Computereinrichtung ausgeführt wird. Die Computereinrichtung kann als Steuergerät (Electronic Control Unit, ECU) oder Diagnosegerät ausgebildet sein. Ferner kann das Computerprogramm auf einem computerlesbaren Speichermedium, beispielsweise einer CD-ROM, DVD oder einem Halbleiterspeicher, abgespeichert sein.

Gemäß einem weiteren Aspekt wird eine Kalibriervorrichtung für eine elektrohydraulische Kraftfahrzeug-Bremsanlage angegeben, die einen Kolben zum Aufbau eines Hydraulikdrucks in der Bremsanlage, einen ersten Aktuator mit einem Elektromotor und einen zweiten Aktuator mit einer Bremspedalschnittstelle umfasst. Der erste Aktuator und der zweite Aktuator vermögen den Kolben zu betätigen, wobei eine erste Sensorik eine Zustandsänderung des ersten Aktuators und eine zweite Sensorik eine Zustandsänderung des zweiten Aktuators zu erfassen vermögen. Die Vorrichtung umfasst eine Ansteuereinheit, die ausgebildet ist zum Ansteuern des Elektromotors, um den Kolben mittels des ersten Aktuators zu betätigen, wobei der zweite Aktuator der Kolbenbetätigung folgt. Die Kalibriervorrichtung umfasst ferner eine Erfassungseinheit, die ausgebildet ist zum Erfassen, während der Kolbenbetätigung, eines von der erste Sensorik erzeugten ersten Signals, das einen Rückschluss auf ein Ausmaß der Kolbenbetätigung gestattet, sowie eines von der zweiten Sensorik erzeugten zweiten Signals. Die Kalibriervorrichtung umfasst auch eine Kalibriereinrichtung, die ausgebildet ist zum Kalibrieren des ersten Signals auf der Grundlage des zweiten Signals, oder umgekehrt.

### Kurze Beschreibung der Zeichnungen

Weitere Vorteile, Aspekte und Einzelheiten der hier vorgestellten hydraulischen Kraftfahrzeug-Bremsanlage ergeben sich aus der nachfolgenden Beschreibung exemplarischer Ausführungsbeispiele sowie aus den Figuren. Es zeigen:
- Fign. 1A und 1B: ein erstes und ein zweites Ausführungsbeispiel einer elektrohydraulischen Kraftfahrzeug-Bremsanlage;
- Fig. 2: ein drittes Ausführungsbeispiel einer elektrohydraulischen Kraftfahrzeug-Bremsanlage;
- Fig. 3A: eine schematische Ansicht der unbetätigten Grundstellung der Bremsanlage nach einer der Fign. 1A und 2;
- Fig. 3B: eine schematische Ansicht der Betätigungsstellung der Bremsanlage nach einer der Fign. 1A und 2;
- Fign. 4A und 4B: schematische Diagramme, welche beispielhaft die Abhängigkeit einer Spaltlänge von einem Bremspedalweg veranschaulichen;
- Fig. 5: ein Ausführungsbeispiel einer Kalibriervorrichtung;
- Fig. 6: ein Flussdiagramm, welches ein Ausführungsbeispiel eines Kalibrierverfahrens veranschaulicht; und
- Fig. 7: einen kalibrierten Kennlinienverlauf von Hall-Sensoriken einer elektrohydraulischen Kraftfahrzeug-Bremsanlage.

### Detaillierte Beschreibung

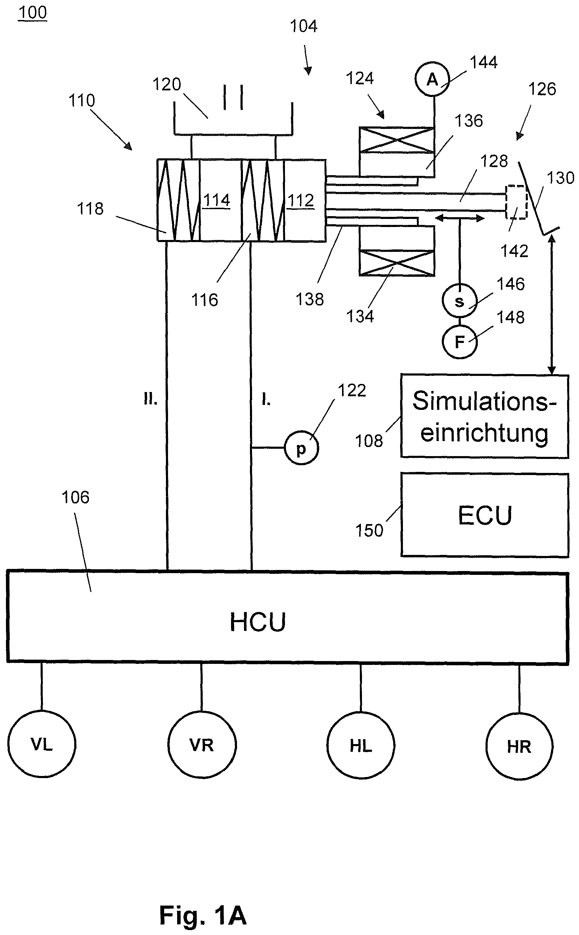

Fig. 1A zeigt ein erstes Ausführungsbeispiel einer zu kalibrierenden hydraulischen Kraftfahrzeug-Bremsanlage 100, die auf dem BBW-Prinzip basiert. Die Bremsanlage 100 kann optional (zum Beispiel bei Hybrid-Fahrzeugen) in einem regenerativen Modus betrieben werden. Zu diesem Zweck kann eine elektrische Maschine vorgesehen sein, die eine Generatorfunktionalität bietet und selektiv mit Rädern und einem Energiespeicher, z.B. einer Batterie, verbunden werden kann.

Wie in Fig. 1A veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen VL, VR, HL und HR des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im Betriebsbremsbetrieb vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einem darin verschieblich aufgenommenen Kolben auf. Der Kolben ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116, 118. Die beiden Hydraulikkammern 116, 118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116, 116 ist ferner mit der HCU 106 gekoppelt und definiert jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hydraulik-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung des Hauptzylinder-Kolbens und wirken dazu auf eine eingangsseitige Stirnfläche dieses Kolbens, genauer gesagt des Primärkolbens 112, ein. Die Aktuatoren 124, 126 sind derart ausgebildet, dass sie unabhängig voneinander (und getrennt oder gemeinsam) den Hauptzylinder-Kolben zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1A gezeigt, ist das Kraftübertragungselement 128 über eine nicht näher bezeichnete Pedalschnittstelle mit einem Bremspedal 130 gekoppelt. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulisch-mechanischer Aktuator 126 ausgebildet.

Der elektromechanische Aktuator 124 weist einen beispielsweise bürstenlos ausgebildeten Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

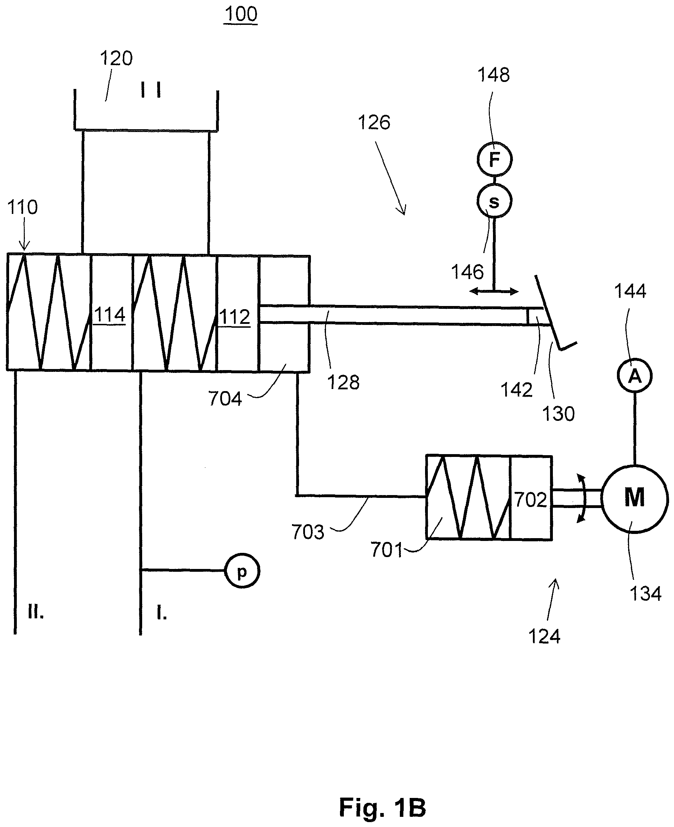

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1A linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1A nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1A nach links verschieben. Ein Verschieben der Kolbenanordnung 112, 114 in Fig. 1A nach rechts wird mittels des in den Hydraulikkammern 116, 118 herrschenden Hydraulikdrucks (bei Loslassen des Bremspedals 130 und ggf. bei motorischem Verschieben der Spindel 138 nach rechts) bewerkstelligt.

Wie in Fig. 1A gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110. Wie ferner in Fig. 1A veranschaulicht, ist dem Elektromotor 134 ein Drehwinkelsensor 144 zugeordnet. Der Drehwinkelsensor 144 kann beispielsweise im Zusammenhang mit der Ansteuerung des Elektromotors 134 zum Einsatz gelangen.

Nachfolgend werden die Funktionsweisen der Entkoppeleinrichtung 142 und der Simulationseinrichtung 108 näher erläutert. In diesem Zusammenhang ist darauf hinzuweisen, dass die in Fig. 1A dargestellt Bremsanlage 100 auf dem BBW-Prinzip basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) über einen in Fig. 1A nicht dargestellten Spalt entkoppelt, und eine Betätigung der Kolbenanordnung 112, 114 kann ausschließlich über den elektromechanischen Aktuator 124 erfolgen. Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 angeforderte Bremskraft wird dabei dadurch erzeugt, dass mittels des Elektromotors 134 die Spindel 138 in Fig. 1A nach links verschoben und dadurch auch der Primärkolben 112 und der Sekundärkolben 114 des Hauptzylinders 110 nach links bewegt werden. Auf diese Weise wird Hydraulikfluid aus den Hydraulikkammern 116, 118 über die HCU 106 zu den Radbremsen VL, VR, HL und HR gefördert.

Die Höhe der daraus resultierenden Bremskraft der Radbremsen VL, VR, HL und HR wird in Abhängigkeit einer sensorisch erfassten Bremspedalbetätigung eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von des Ausgangssignals wenigstens eines der Sensoren 146, 148 (sowie ggf. des Drucksensors 122) wird vom Steuergerät 150 ein Ansteuersignal für den Elektromotor 134 erzeugt. Die Erzeugung des Ansteuersignals kann ferner ein Ausgangssignal des Drehwinkelsensors 144 berücksichtigen.

Im vorliegenden Ausführungsbeispiel erfolgt die Ansteuerung des Elektromotors 134 (und damit des elektromechanischen Aktuators 124) derart, dass die Länge des eingangs genannten Spalts zur Entkopplung des Bremspedals 130 von der Hauptzylinder-Kolbenanordnung 112, 114 eine Abhängigkeit vom Pedalweg des Bremspedals 130 aufweist. Die Abhängigkeit ist derart gewählt, dass die Spaltlänge mit einem Niedertreten des Bremspedals 130 (also mit zunehmendem Pedalweg) zunimmt. Zu diesem Zweck wertet das Steuergerät 150 das Ausgangssignal des Wegsensors 146 (und zusätzlich oder alternativ des Kraftsensors 148) aus und steuert den elektromechanischen Aktuator 124 derart an, dass die Kolbenanordnung 112, 114 bei einem Niedertreten des Bremspedals 130 schneller in Fig. 1A nach links verfahren wird, als eine bremspedalseitige Begrenzung des Spalts der Kolbenanordnung 112, 114 nacheilt. Eine korrekte Ansteuerung des Elektromotors 134 kann mit dem Drehwinkelsensor 144 überprüft werden. So kann der Drehwinkel integriert werden, um die Anzahl von Umdrehungen des Elektromotors zu ermitteln. Aus der Anzahl der Umdrehungen lässt sich wiederum bei bekannter Kennlinie des dem Elektromotor 134 nachgeschalteten Getriebes 136, 138 auf den von der Spindel 138 zurückgelegten Weg schließen.

Nachdem die Vorgänge bei einer Betriebsbremsung (BBW-Modus) näher erläutert wurden, wird jetzt kurz der "Push-Through", PT-Modus bei einem Notbremsbetrieb geschildert. Der Notbremsbetrieb ist beispielsweise die Folge des Ausfalls der Fahrzeugbatterie oder einer Komponente des elektromechanischen Aktuators 124. Eine Deaktivierung der Entkoppeleinrichtung 142 (und der Simulationseinrichtung 108) im Notbremsbetrieb ermöglicht eine direkte Koppelung des Bremspedals 130 mit dem Hauptzylinder 110, nämlich über das Kraftübertragungselement 128.

Die Notbremsung wird eingeleitet durch Niedertreten des Bremspedals 130. Die Bremspedalbetätigung überträgt sich dann unter Überwindung des eingangs genannten Spalts über das Kraftübertragungselement 128 auf den Hauptzylinder 110. In Folge dessen verschiebt sich die Kolbenanordnung 112, 114 in Fig. 1A nach links. Dadurch wird zur Bremskrafterzeugung Hydraulikfluid aus den Hydraulikkammern 116, 118 des Hauptzylinders 110 über die HCU 106 zu den Radbremsen VL, VR, HL und HR gefördert.

Fig. 1B zeigt ein weiteres Ausführungsbeispiel einer Kraftfahrzeug-Bremsanlage 100, welches auf einem anderen Funktionsprinzip als das in Fig. 1A gezeigte Ausführungsbeispiel basiert. Gleiche oder ähnliche Elemente wurden mit den gleichen Bezugszeichen wie in Fig. 1A versehen, und auf deren Erläuterung wird nachfolgend verzichtet. Der Klarheit halber wurden einige Elemente aus Fig. 1A fortgelassen.

Wie in Fig. 1B gezeigt, wirkt der Elektromotor 134 im Ausführungsbeispiel gemäß Fig. 1B nicht unmittelbar über ein mechanisches Getriebe auf den Primärkolben 112 ein, sondern über ein hydraulisches Prinzip. Zu diesem Zweck ist eine separate Anordnung aus einem Hydraulikzylinder 701 und einem Kolben 702 vorgesehen, wobei der Zylinder 701 über eine Fluidleitung 703 hydraulisch mit einer Eingangskammer 704 des Hauptzylinders 110 gekoppelt ist. Der Kolben 702 im Zylinder 701 lässt sich mittels eines nur schematisch dargestellten Getriebes vom Elektromotor 134 betätigen, um Hydraulikfluid aus dem Zylinder 701 in die Eingangskammer 704 des Hauptzylinders 110 zu fördern (oder umgekehrt). Die daraus resultierende Hydraulikdruckänderung in der Eingangskammer 704 bewirkt eine Verschiebung des Primärkolbens 112 sowie des Sekundärkolbens 114 im Hauptzylinder 110 und damit eine Bremsdruckänderung in den Bremskreisen I. und II.

Auch bei dem Ausführungsbeispiel gemäß Fig. 1B ist im BBW-Modus der mechanische Aktuator 126 über einen nicht dargestellten Spalt vom Primärkolben 112 entkoppelt. Die Länge des Spalts ist abhängig vom Betätigungsweg des Bremspedals 130.

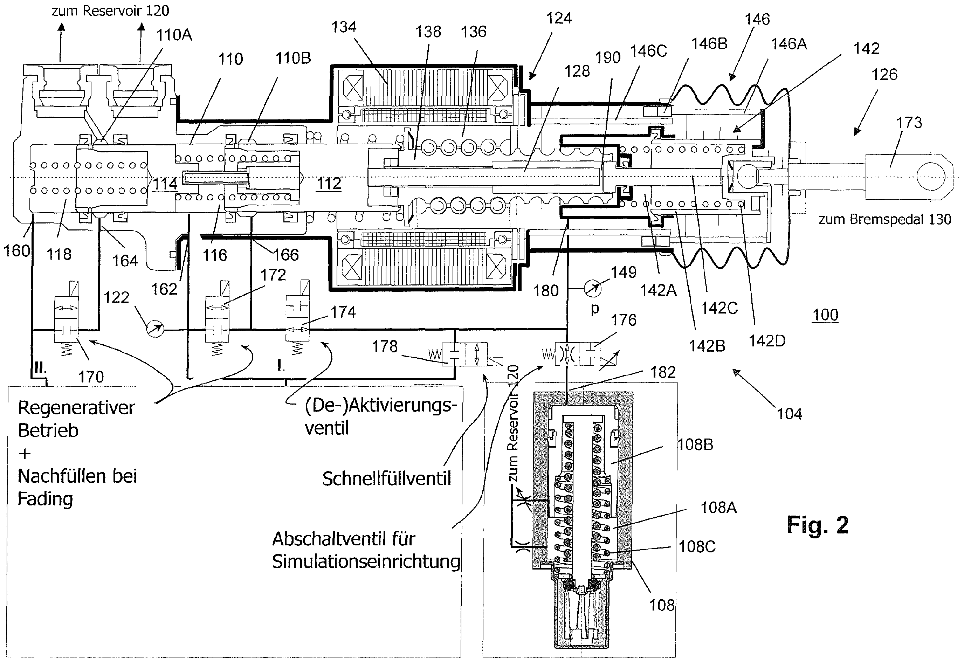

Fig. 2 zeigt ein detaillierteres Ausführungsbeispiel einer Kraftfahrzeug-Bremsanlage 100, welche auf dem im Zusammenhang mit dem schematischen Ausführungsbeispiel der Fig. 1A erläuterten Funktionsprinzip basiert. Gleiche oder ähnliche Elemente wurden dabei mit den gleichen Bezugszeichen wie in Fig. 1A versehen, und auf deren Erläuterung wird nachfolgend verzichtet. Der Klarheit halber wurden die ECU, die Radbremsen und die den Radbremsen zugeordneten Ventileinheiten der HCU nicht dargestellt.

Auch die in Fig. 2 veranschaulichte Fahrzeug-Bremsanlage 100 umfasst zwei Bremskreise I. und II., wobei zwei Hydraulikkammern 116, 118 eines Hauptzylinders 110 jeweils wiederum genau einem Bremskreis I., II. zugeordnet sind. Der Hauptzylinder 110 besitzt pro Bremskreis I., II. zwei Anschlüsse. Die beiden Hydraulikkammern 116, 118 münden dabei jeweils in einen ersten Anschluss 160, 162, über den Hydraulikfluid aus der jeweiligen Kammer 116, 118 in den zugeordneten Bremskreis I., II. gefördert werden kann. Ferner kann jeder der Bremskreise I. und II. über jeweils einen zweiten Anschluss 164, 166, der in eine entsprechende Ringkammer 110A, 110B im Hauptzylinder 110 mündet, mit dem in Fig. 2 nicht dargestellten drucklosen Hydraulikfluid-Reservoir (Bezugszeichen 120 in Fig. 1A) verbunden werden.

Zwischen dem jeweils ersten Anschluss 160, 162 und dem jeweils zweiten Anschluss 164, 166 des Hauptzylinders 110 ist jeweils ein Ventil 170, 172 vorgesehen, das im Ausführungsbeispiel als ein 2/2-Wege-Ventil realisiert ist. Mittels der Ventile 170, 172 können die ersten und zweiten Anschlüsse 160, 162, 164, 166 selektiv miteinander verbunden werden. Dies entspricht einem "hydraulischer Kurzschluss" zwischen dem Hauptzylinder 110 einerseits und, auf der anderen Seite, dem drucklosen Hydraulikfluidreservoir (welches dann über die Ringkammern 110A, 110B mit den Hydraulickammern 116, 118 verbunden wird). In diesem Zustand können die Kolben 112, 114 im Hauptzylinder 110 im Wesentlichen widerstandsfrei durch den elektromechanischen Aktuator 124 oder den mechanischen Aktuator 126 verschoben werden ("Leerwegfreischaltung"). Die beiden Ventile 170, 172 ermöglichen so beispielsweise einen regenerativen Bremsbetrieb (Generatorbetrieb). Hier wird das bei einer Förderbewegung im Hauptzylinder 110 aus den Hydraulikkammern 116, 118 verdrängte Hydraulikfluid dann nicht zu den Radbremsen geleitet, sondern zum drucklosen Hydraulikfluidreservoir, ohne dass es zu einem (im regenerativen Bremsbetrieb in der Regel unerwünschten) Hydraulikdruckaufbau an den Radbremsen käme.

Die beiden Ventile 170, 172 ermöglichen ferner den Abbau von Hydraulikdruck an den Radbremsen. Ein solcher Druckabbau kann bei Ausfall (z.B. einer Blockierung) des elektromechanischen Aktuators 124 erwünscht sein oder im Fahrdynamikregelbetrieb, um einen Rückhub des elektromechanischen Aktuators 124 zu vermeiden (z.B. um eine Rückwirkung auf das Bremspedal zu vermeiden). Auch zum Druckabbau werden die beiden Ventile 170, 172 in ihre geöffnete Stellung übergeführt, wodurch Hydraulikfluid aus den Radbremsen über die Ringkammern 110A, 110B im Hauptzylinder 110 in das Hydraulikfluid-Reservoir zurückströmen kann.

Schließlich ermöglichen die Ventile 170, 172 auch noch ein Nachfüllen der Hydraulickammern 116, 118. Ein solches Nachfüllen kann während eines laufenden Bremsvorgangs erforderlich werden (z.B. aufgrund von so genanntem Bremsen-"Fading"). Zum Nachfüllen werden die Radbremsen über zugeordnete Ventile der HCU (in Fig. 2 nicht dargestellt) fluidisch von den Hydraulikkammern 116, 118 getrennt. Der an den Radbremsen herrschende Hydraulikdruck wird also "eingesperrt". Daraufhin werden die Ventile 170, 172 geöffnet. Bei einem anschließenden Rückhub der im Hauptzylinder 110 vorgesehen Kolben 112, 114 (in Fig. 2 nach rechts) wird dann Hydraulikfluid aus dem drucklosen Reservoir in die Kammern 116, 118 gesaugt. Schließlich können die Ventile 170, 172 wieder geschlossen und die Hydraulikverbindungen zu den Radbremsen wieder geöffnet werden. Bei einem nachfolgenden Förderhub der Kolben 112, 114 (in Fig. 2 nach links) kann dann der vormals "eingesperrte" Hydraulikdruck weiter erhöht werden.

Wie in Fig. 2 gezeigt, basieren im vorliegenden Ausführungsbeispiel sowohl die Simulationseinrichtung 108 als auch die Entkoppeleinrichtung 142 auf einem hydraulischen Prinzip. Beide Einrichtungen 108, 142 umfassen jeweils einen Zylinder 108A, 142A zur Aufnahme von Hydraulikfluid sowie einen im jeweiligen Zylinder 108A, 142A aufgenommenen Kolben 108B, 142B. Der Kolben 142B der Entkoppeleinrichtung ist 142 ist mechanisch über eine Pedalschnittstelle 173 mit einem in Fig. 2 nicht dargestellten Bremspedal (vgl. Bezugszeichen 130 in den Fign. 1A und 2) gekoppelt. Ferner besitzt der Kolben 142B einen sich durch den Zylinder 142A in axialer Richtung hindurch erstreckenden Fortsatz 142C. Der Kolbenfortsatz 142C verläuft koaxial zu einem Kraftübertragungselement 128 für den Primärkolben 112 und ist diesem in Betätigungsrichtung des Bremspedals vorgelagert.

Jeder der beiden Kolben 108B, 142B wird von einem elastischen Element 108C, 142D (hier jeweils einer Schraubenfeder) in seine Ausgangsstellung vorgespannt. Die Kennlinie des elastischen Elements 108C der Simulationseinrichtung 108 definiert hierbei das gewünschte Pedalrückwirkverhalten.

Wie ferner in Fig. 2 gezeigt, umfasst die Fahrzeug-Bremsanlage 100 im vorliegenden Ausführungsbeispiel drei weitere Ventile 174, 176, 178, die hier als 2/2-Wege-Ventile realisiert sind. Es versteht sich, dass einzelne oder alle dieser drei Ventile 174, 176, 178 bei anderen Ausführungsformen, bei denen die entsprechenden Funktionalitäten nicht erforderlich sind, entfallen können.

Das erste Ventil 174 ist einerseits zwischen der Entkoppeleinrichtung 142 (über einen im Zylinder 142A vorgesehenen Anschluss 180) sowie der Simulationseinrichtung 108 (über einen im Zylinder 108A vorgesehenen Anschluss 182) und andererseits dem drucklosen Hydraulikfluidreservoir (über den Anschluss 166 des Hauptzylinders 110) vorgesehen. Dem Anschluss 182 des Zylinders 108A ist das zweite Ventil 176 vorgeschaltet, das in seiner Durchlass-Stellung eine Drosselcharakteristik aufweist. Diese Ventil 176 besitzt eine vorgegebene oder einstellbare Drosselfunktion. Mittels der einstellbaren Drosselfunktion lässt sich beispielsweise eine Hysterese oder anderweitige Kennlinie für das Pedalrückwirkverhalten erzielen. Ferner kann durch selektives Sperren des Ventils 176 die Bewegung des Kolbens 142B (bei geschlossenen Ventilen 174, 178) und damit der Bremspedalweg begrenzt werden. Das dritte Ventil 178 schließlich ist zwischen der Hydraulikkammer 116 (über den Anschluss 116) und dem Bremskreis I. einerseits und dem Zylinder 142A der Entkoppeleinrichtung 142 (über den Anschluss 180) andererseits vorgesehen. Das dritte Ventil 178 ermöglich in seiner geöffneten Stellung das Fördern von Hydraulikfluid aus dem Kolben 142A in den Bremskreis I. bzw. die Hydraulikkammer 116 des Hauptzylinders 110 und umgekehrt.

Das erste Ventil 174 ermöglicht eine selektive Aktivierung und Deaktivierung der Entkoppeleinrichtung 142 (und indirekt auch der Simulationseinrichtung 108). Befindet sich das Ventil 174 in seiner geöffneten Stellung, ist die der Zylinder 142A der Entkoppeleinrichtung 142 hydraulisch mit dem drucklosen Hydraulikreservoir verbunden. In dieser Stellung ist die Entkoppeleinrichtung 142 entsprechend dem Notbremsbetrieb deaktiviert. Ferner ist auch die Simulationseinrichtung 108 deaktiviert.

Das Öffnen des Ventils 174 bewirkt, dass bei Verschieben des Kolbens 142B (infolge einer Betätigung des Bremspedals) das im Zylinder 142A aufgenommene Hydraulikfluid weitgehend widerstandsfrei in das drucklose Hydraulikfluidreservoir gefördert werden kann. Dieser Vorgang ist im Wesentlichen unabhängig von der Stellung des Ventils 176, da dieses auch in seiner geöffneten Stellung eine signifikante Drosselwirkung besitzt. Somit ist bei geöffneter Stellung des Ventils 174 auf indirekte Weise auch die Simulationseinrichtung 108 deaktiviert.

Bei einer Bremspedalbetätigung im geöffneten Zustand des Ventils 174 überwindet der Kolbenfortsatz 142C einen Spalt 190 hin zum Kraftübertragungselement 128 und gelangt infolgedessen in Anlage an das Kraftübertragungselement 128. Das Kraftübertragungselement 128 wird nach Überwindung des Spalts 190 von der Verschiebung des Kolbenfortsatzes 142C erfasst und betätigt daraufhin den Primärkolben 112 (sowie - indirekt - den Sekundärkolben 114) im Hauptbremszylinder 110. Dies entspricht der bereits im Zusammenhang mit der Fig. 1A erläuterten direkten Kopplung von Bremspedal und Hauptzylinderkolben zum Hydraulikdruckaufbau in den Bremskreisen I., II. im Notbremsbetrieb.

Bei geschlossenem Ventil 174 (und geschlossenem Ventil 178) ist die Entkoppeleinrichtung 142 hingegen aktiviert. Dies entspricht dem Betriebsbremsbetrieb. Dabei wird bei einer Betätigung des Bremspedals Hydraulikfluid aus dem Zylinder 142A in den Zylinder 108A der Simulationseinrichtung 108 gefördert. Auf diese Weise wird der Simulator-Kolben 108B gegen die vom elastischen Element 108C bereit gestellte Gegenkraft verschoben, so dass sich das gewohnte Pedalrückwirkverhalten einstellt. Gleichzeitig wird der Spalt 190 zwischen dem Kolbenfortsatz 142C und dem Kraftübertragungselement 128 weiter aufrechterhalten. Dadurch ist das Bremspedal vom Hauptzylinder mechanisch entkoppelt.

Im vorliegenden Ausführungsbeispiel erfolgt die Aufrechterhaltung des Spalts 190 dadurch, dass mittels des elektromechanischen Aktuators 124 der Primärkolben 112 wenigstens so schnell in Fig. 2 nach links bewegt wird, wie sich der Kolben 142B aufgrund der Bremspedalbetätigung nach links bewegt. Da das Kraftübertragungselement 128 mechanisch oder anderweitig (z.B. magnetisch) mit dem Primärkolben 112 gekoppelt ist, bewegt sich das Kraftübertragungselement 128 zusammen mit dem Primärkolben 112 bei dessen Betätigung mittels der Getriebespindel 138. Diese Mitnahme des Kraftübertragungselements 128 gestattet die Aufrechterhaltung des Spalts 190.

Die Aufrechterhaltung des Spalts 190 im Betriebsbremsbetrieb erfordert eine präzise Erfassung des vom Kolben 142B zurückgelegten Wegs (und damit des Pedalwegs). Zu diesem Zweck ist ein auf einem magnetischen Prinzip basierender Wegsensor 146 vorgesehen. Der Wegsensor 146 umfasst einen starr mit dem Kolben 142B gekoppelten Stößel 146A, an dessen Ende ein Magnetelement 146B angebracht ist. Die Bewegung des Magnetelements 146B (d.h. der vom Stößel 146B bzw. Kolben 142B zurückgelegte Weg) wird mittels eines Hallsensors 146C erfasst. Ein Ausgangssignal des Hallsensors 146C wird von einer in Fig. 2 nicht gezeigten Steuereinheit (vgl. Bezugszeichen 150 in Fig. 1) ausgewertet. Basierend auf dieser Auswertung kann dann der elektromechanische Aktuator 124 angesteuert werden.

In einer in den Anschluss 180 des Zylinders 142A mündenden Hydraulikleitung ist ein Drucksensor 149 vorgesehen, dessen Ausgangssignal einen Rückschluss auf die Betätigungskraft am Bremspedal gestattet. Das Ausgangssignal dieses Drucksensors 149 wird von einer in Fig. 2 nicht gezeigte Steuereinheit ausgewertet. Basierend auf dieser Auswertung kann dann eine Ansteuerung eines oder mehrerer der Ventile 170, 172, 174, 176, 178 zur Realisierung der oben geschilderten Funktionalitäten erfolgen. Ferner kann basierend auf dieser Auswertung der elektromechanische Aktuator 124 angesteuert werden.

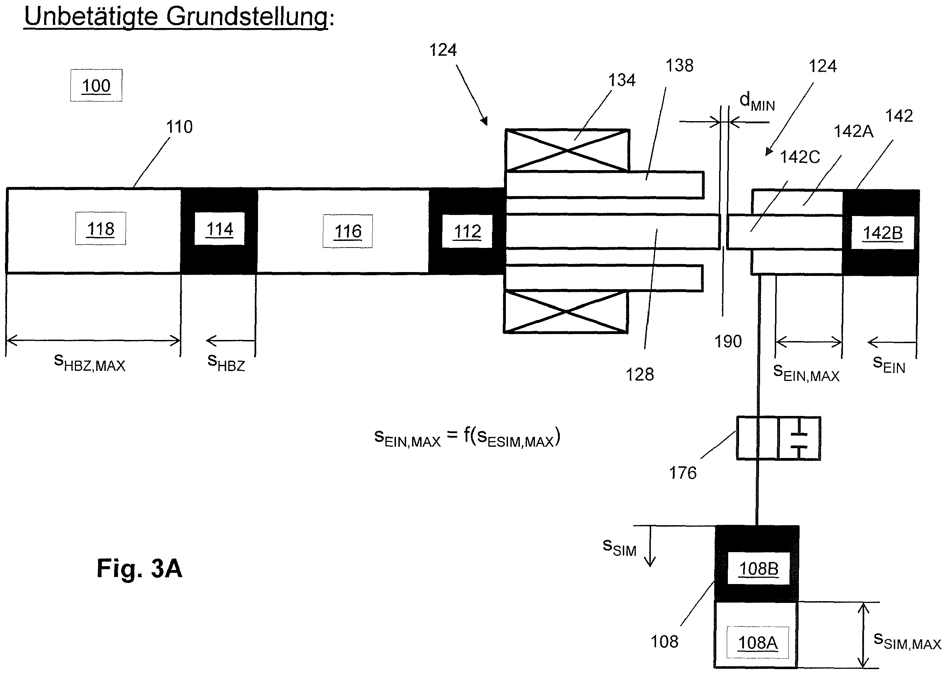

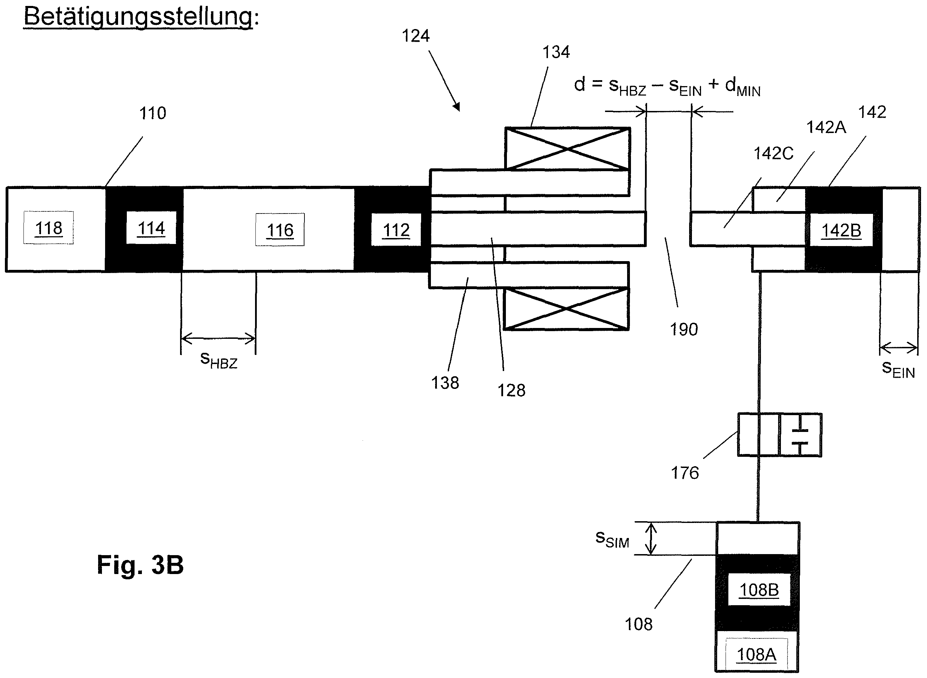

Auch bei dem Ausführungsbeispiel gemäß Fig. 2 ist eine Pedalwegabhängigkeit des Spalts 190 zwischen dem Kraftübertragungselement 128 einerseits und dem Kolbenfortsatz 142C andererseits gegeben. Nachfolgend werden unter Bezugnahme auf die schematischen Fign. 3A und 3B die Vorgänge beim Betätigen der Bremsanlage 100 Fig. 2 im Hinblick auf die Wegabhängigkeit einer Länge d des Spalts 190 ("Spaltlänge d") näher erläutert. Es versteht sich, dass die entsprechenden technischen Einzelheiten auch bei den Bremsanlagen 100 gemäß den Fign. 1A und 1B implementierbar sind.

In den Fign. 3A und 3B sind die für eine Erläuterung der Wegabhängigkeit der Spaltlänge d maßgeblichen Komponenten der Bremsanlage 100 gemäß Fig. 2 dargestellt. Fig. 3A veranschaulicht dabei die unbetätigte Grundstellung der Bremsanlage 100 im BBW-Modus (also bei unbetätigtem Bremspedal), während Fig. 3B die Betätigungsstellung im BBW-Modus zeigt.

Wie in Fig. 3A veranschaulicht, ist der Spalt 190 zwischen einander zugewandten Stirnflächen des Kraftübertragungselements 128 einerseits und des Kolbenfortsatzes 142C andererseits ausgebildet. Im unbetätigten Grundzustand gemäß Fig. 3A weist die Spaltlänge d einen vorgegebenen Minimalwert d_{MIN} von ungefähr 1 mm auf.

Bei einer Bremspedalbetätigung wird der Kolben 142B im Zylinder 142A in Fig. 3A nach links verschoben und legt einen Weg s_{EIN} zurück. Im BBW-Modus ist das Ventil 176 zwischen dem Zylinder 142A und dem Zylinder 108A der Simulations-Einrichtung 108 dabei normalerweise geöffnet. Das bei einem Verschieben des Kolbens 142B aus der Kammer 142A verdrängte Hydraulikfluid kann somit in den Zylinder 108A verdrängt werden und verschiebt dabei den Kolben 108B in Fig. 3A entgegen einer Federkraft nach unten (vgl. Element 108C in Fig. 2). Diese Federkraft bewirkt das für den Fahrer vertraute Pedalrückwirkverhalten.

Der Weg s_{EIN}, den der Kolben 142B im Zylinder 142A bei einer Bremspedalbetätigung zurücklegen kann, ist auf einen Maximalwert s_{EIN, MAX} von typischerweise 10 bis 20 mm (z. B. ungefähr 16 mm) begrenzt. Diese Begrenzung bewirkt auch eine Begrenzung des Bremspedalwegs.

Im Ausführungsbeispiel gemäß Fig. 3A ergibt sich die Begrenzung auf den Maximalwert s_{EIN, MAX} aufgrund eines Anschlags im Zylinder 108A für den Kolben 108B, der den Weg s_{SIM} des Kolbens 108A auf einen Maximalwert s_{SIM, MAX} begrenzt. Zwischen den Maximalwerten s_{EIN, MAX} und s_{SIM, MAX} besteht ein funktionaler Zusammenhang, der durch das zwischen den beiden Zylindern 142A, 108A verschobene Volumen an Hydraulikfluid und die hydraulisch wirksamen Arbeitsflächen der beiden Zylinder 142B, 108B vorgegeben ist.

Wie bereits oben erläutert, besteht die Möglichkeit, den Weg s_{EIN} auf einen geringeren Maximalwert als durch s_{SIM, MAX} festgelegt ist zu begrenzen. Diese Begrenzung geschieht durch Schließen des Ventils 176, bevor der Kolben 108B seinen Anschlag im Zylinder 108A erreicht (es wird hier angenommen, dass das aus dem Zylinder 142A verdrängte Hydraulikfluid nicht anderweitig entweichen kann, also beispielsweise die Ventile 174, 178 in Fig. 2 geschlossen sind). Die Begrenzung des Wegs s_{EIN} durch Schließen des Ventils 176 begrenzt somit den Pedalweg. Eine solche Pedalwegbegrenzung wird im vorliegenden Ausführungsbeispiel bei Einsetzen einer ABS-Regelung vorgenommen.

Bei einer Betätigung des Bremspedals im BBW-Modus wird der elektromechanische Aktuator 124 angesteuert, um mittels der Spindel 138 auf den Primärkolben 112 im Hauptzylinder 110 einzuwirken, und damit auch auf den Sekundärkolben 114. Die Kolbenanordnung 112, 114 verschiebt sich daraufhin um einen Weg s_{HBZ} in Fig. 3A nach links (bzw. bei Loslassen des Bremspedals nach rechts). Der Weg s_{HBZ} ist ebenfalls auf einen Maximalwert s_{HBZ}, _{MAX} von circa 35 bis 50 mm (z. B. etwa 42 mm) begrenzt. Diese Begrenzung ergibt sich aufgrund eines Anschlags im Hauptzylinder 110 für wenigstens einen der beiden Kolben 112, 114.

Wie bereits oben aufgeführt, ist das Kraftübertragungselement 128 fest oder lösbar (z. B. durch magnetische Kräfte) und mechanisch mit dem Primärkolben 112 gekoppelt. Eine Verschiebung des Primärkolbens 112 (und des Sekundärkolbens 114) im Hauptzylinder 110 bewirkt daher richtungs- und wegmäßig die gleiche Verschiebung des Kraftübertragungselements 128.

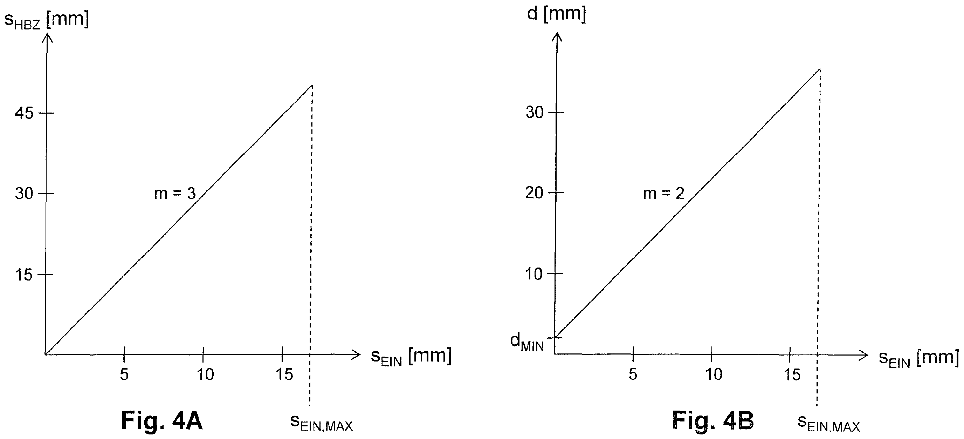

Die Ansteuerung des elektromechanischen Aktuators 124 erfolgt nun derart, dass zwischen s_{EIN} und s_{HBZ} ein bestimmtes Übersetzungsverhältnis definiert ist. Das Übersetzungsverhältnis ist im Ausführungsbeispiel > 1 gewählt und beträgt beispielsweise 1:3 (vgl. Fig. 4A). Aufgrund der starren Kopplung des Kraftübertragungselements 128 mit dem Primärkolben 112 sowie des Kolbenfortsatzes 142C mit dem Kolben 142B stellt sich dasselbe Übersetzungsverhältnis zwischen einem zurückgelegten Weg der dem Kraftübertragungselement 128 zugewandten Stirnfläche des Kolbenfortsatzes 142C und einem zurückgelegten Weg einer dem Kolbenfortsatz 142C zugeordneten Stirnfläche des Kraftübertragungselements 128 ein.

Das Übersetzungsverhältnis ist folglich derart gewählt, dass die Spaltlänge d mit Niedertreten des Bremspedals kontinuierlich zunimmt. Damit wird erreicht, dass das Kraftübertragungselement 138 sich schneller in Fig. 3B nach links bewegt als der Kolbenfortsatz 142C diesem nachfolgt. Es kann hier also von einer Übersetzung zwischen dem Weg s_{EIN} des Kolbens 142B auf der Spaltlänge d die Rede sein, wobei das Übersetzungsverhältnis, wie in Fig. 4B gezeigt, ungefähr 2 beträgt (und allgemein zwischen 1:1,5 und 1:4 liegen kann.

Die mit Niederteten des Bremspedals zunehmende Spaltlänge d ist aus Sicherheitsaspekten vorteilhaft, da mit zunehmendem Bremspedalweg eine "stärkere" mechanische Entkoppelung des Bremspedals von der Kolbenanordnung 112, 114 im Hauptzylinder 110 erreicht wird.

In den obigen Ausführungsbeispielen ist der Spalt 190 zwischen dem Kraftübertragungselement 128 und dem Kolbenfortsatz 142C vorgesehen. Es ist darauf hinzuweisen, dass in anderen Ausführungsformen der Spalt auch an einer anderen Stelle im Kraftübertragungsweg zwischen dem Bremspedal 130 und der Hauptzylinder-Kolbenanordnung 112, 114 vorgesehen werden könnte. Beispielsweise ist es denkbar, den Kolbenfortsatz 142C und das Kraftübertragungselement 128 als eine einzige, spaltfreie Komponente auszubilden. In diesem Fall könnte dann ein Spalt zwischen der dem Bremspedal zugewandten Stirnseite des Primärkolbens 112 und der dem Primärkolben 112 zugewandten Stirnfläche des integrierten Elements 128, 142C vorgesehen sein.

Wie sich aus der obigen Erläuterung ergibt, ist für die Funktionsfähigkeit der in den Fign. 1A, 1B und 2 dargestellten Bremsanlage 100 eine exakte Positionsmessung des Kolbens 142B mittels der Hall-Sensorik 146B, 146C von großer Bedeutung, um die in den Fign. 4A und 4B dargestellte Betätigungswegabhängigkeit der Breite des Spalts 190 realisieren zu können. Im Folgenden wird ein Kalibrierverfahren für die Hall-Sensorik 146B, 146C auf der Grundlage eines Ausgangssignals des für den Elektromotor 134 vorgesehenen Drehwinkelsensors 144 erläutert. Es ist bereits an dieser Stelle darauf hinzuweisen, dass anstelle der Hall-Sensorik 146B, 146C auch der Kraftsensor 148 oder der Drucksensor 149 (vgl. Fign. 1A, 1B und 2) in ähnlicher Weise kalibriert werden könnte. Bei der Kalibrierung der entsprechenden Sensoriken 146, 148, 149 wird im nachfolgenden Ausführungsbeispiel das entsprechende Sensorsignal auf einen Weg bezogen, der auf der Grundlage eines Signals des Drehwinkelsensors 144 bestimmt wurde. Es ist anzumerken, dass in anderen Ausführungsbeispielen die Ausgangssignale der Sensoriken 146, 148, 149 auch auf andere physikalische Größen bezogen werden können.

Das Kalibrieren der Bremsanlage 100 kann vor dem Einbau in ein Kraftfahrzeug oder im eingebauten Zustand erfolgen. Gemäß der nachfolgend beschriebenen Variante erfolgt das Kalibrieren im Rahmen eines End-of-Line-Tests vor dem Einbau der Bremsanlage 100 in ein Kraftfahrzeug. Im Fall der Ausführungsbeispiele gemäß den Fign. 1A und Fig. 2 ist die Bremsanlage 100, und insbesondere die Hydraulikkammern 116, 118, während des Kalibrierens nicht mit Hydraulikfluid gefüllt. Das Kalibrieren erfolgt also im "trockenen" Zustand der Bremsanlage 100. Im Fall des Ausführungsbeispiels gemäß Fig. 1B ist zumindest der dem Primärkolben 112 vorgeschaltete Hydraulikkreis (Zylinder 701, Hydraulikleitung 703 und Eingangskammer 704) mit Hydraulikfluid befüllt.

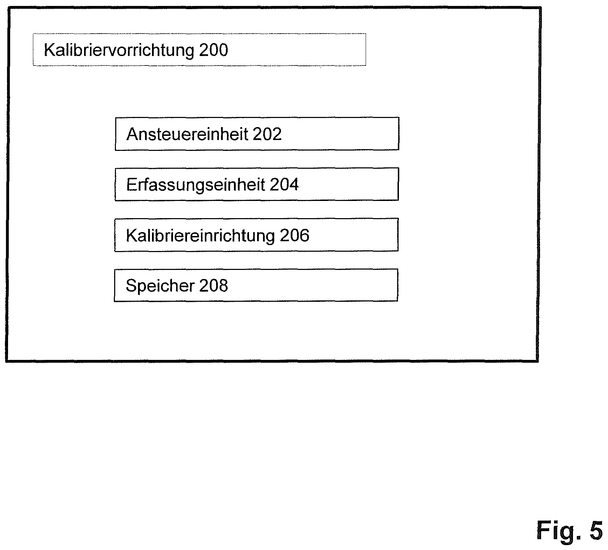

Fig. 5 zeigt ein Ausführungsbeispiel einer Kalibriervorrichtung 200 für die Bremsanlage 100 gemäß den Fign. 1A, 1B und 2. Die Kalibriervorrichtung 200 kann Teil eines Diagnosegeräts oder eines anderweitigen Testgeräts sein.

Wie in Fig. 5 gezeigt, umfasst die Kalibriervorrichtung 200 eine Ansteuereinheit 202, eine Erfassungseinheit 204, eine Kalibriereinrichtung 206 sowie einen Speicher 208.

Die Ansteuereinheit 202 ist dazu ausgebildet, den Elektromotor 134 anzusteuern, um den im Hauptzylinder 110 aufgenommenen Kolben (d.h. den Primärkolben 12 und den Sekundärkolben 114) zu betätigen. Zu diesem Zweck ist die Ansteuereinheit 202 entweder unmittelbar an den Elektromotor 134 angeschlossen oder aber an das für den Elektromotor 134 vorgesehene Steuergerät 150 (vgl. Fig. 1A).

Die Erfassungseinheit 204 ist elektrisch mit denjenigen Sensoriken der Bremsanlage 100 gekoppelt, die für den jeweiligen Kalibriervorgang zu betrachten sind. Im nachfolgenden Ausführungsbeispiel ist die Erfassungseinheit 204 einerseits mit dem Drehwinkelsensor 144 und andererseits mit dem Hall-Sensor 146C elektrisch gekoppelt.

Die Kalibriereinrichtung 206 ist dazu ausgebildet, eine Kalibrierung auf der Grundlage der von der Erfassungseinheit 204 erfassten Sensorsignale durchzuführen. Das Ergebnis der Kalibrierung kann dann in Form von Daten in einem Steuergerät der Bremsanlage 100, beispielsweise in dem in Fig. 1A dargestellten Steuergerät 150, abgelegt werden. Ferner ist eine Zwischenspeicherung des Kalibrierergebnisses in dem Speicher 208 der Kalibriervorrichtung 200 möglich. Der Speicher 208 dient ferner dazu, die von der Erfassungseinheit 204 erfassten Signale zumindest zeitweise abzuspeichern. Die Kalibriereinrichtung 206 kann dann auf die von der Erfassungseinheit 204 im Speicher 208 abgespeicherten Signale zugreifen.

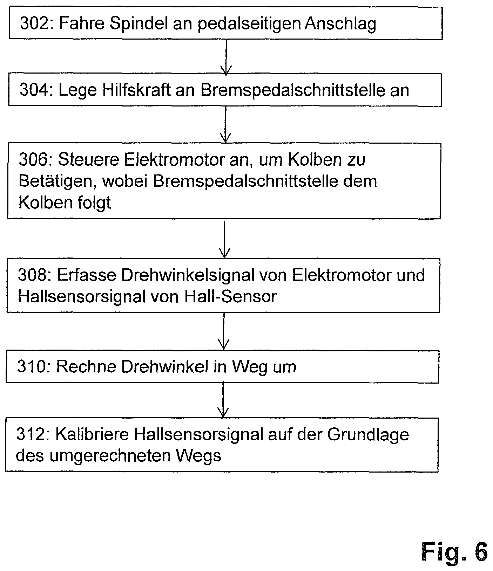

Im Folgenden wird das mittels der Kalibriervorrichtung 200 durchgeführte Kalibrierverfahren unter der Bezugnahme auf das Ausführungsbeispiel gemäß Fig. 2 sowie das in Fig. 6 dargestellte Flussdiagramm näher erläutert.

In einem ersten Schritt 302 wird von der Ansteuereinheit 202 der Elektromotor 134 derart angesteuert, dass die Spindel 138 an ihren pedalseitigen Anschlag gefahren wird. Schritt 302 ermöglicht das Ausnutzen des maximal verfügbaren Kolbenhubs.

In einem nächsten Schritt 304 wird dann eine Hilfskraft an den mit dem Bremspedal 130 (bzw. mit der in Fig. 2 dargestellten Bremspedalschnittstelle 173) gekoppelten Kolben 142B angelegt. Diese Hilfskraft bewirkt, dass der Kolben 142B zusammen mit dem Kolbenfortsatz 142B unter Überwindung des Spalts 190 in Anlage an das Betätigungselement 128 gelangt. Der Kolben 142B ist damit mechanisch mit dem Primärkolben 112 gekoppelt und kann unter der Hilfskraft einer Verschiebung des Kolbens 112 in Fig. 2 nach links (und rechts) folgen. Von dieser Folge-Bewegung wird auch der mit dem Kolben 142B starr gekoppelte Stößel 146A erfasst, der das Magnetelement 146B trägt. Das Nacheilen des Kolbens 142B bei einer Verschiebung des Primärkolbens 112 in Fig. 2 nach links überträgt sich damit unmittelbar auf das Magnetelement 146B und kann entsprechend von dem Hall-Sensor 146C erfasst werden.

In einem weiteren Schritt 306 wird der Elektromotor 134 von der Ansteuereinheit 202 derart angesteuert, dass der Primärkolben 112 sowie der Sekundärkolben 114 langsam an ihren in Fig. 2 linken Anschlag gefahren werden. Der von dem Primärkolben 112 dabei zurückgelegte Weg von ungefähr 40 mm wird in ungefähr 15 Sekunden überfahren. Aufgrund der an dem Kolben 142B angelegten Hilfskraft folgt, wie oben dargelegt, der Kolben 142B (und damit das am Stößel 146A montierte Magnetelement 146B) der Bewegung des Primärkolbens 112 unmittelbar nach.

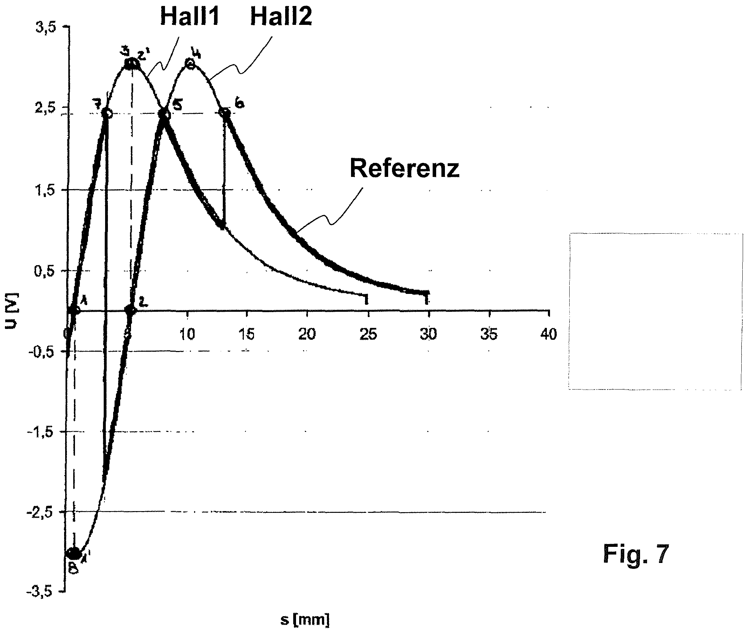

Während der Kolbenbetätigung in Folge des Ansteuer-Schritts 306 werden von der Erfassungseinheit 204 fortlaufend Paare von Signalpegeln, oder Signalwerten, des Drehzahlsensors 144 einerseits und des Hall-Sensors 146C andererseits erfasst und zusammen im Speicher 208 abgespeichert (Schritt 308 in Fig. 6). Aufgrund der bekannten Kennlinie des Getriebes (vgl. Bezugszeichen 136/138 in Fig. 2) lässt sich durch Integration des vom Drehwinkelsensor 144 gelieferten Drehwinkelsignals das Ausmaß der Kolbenbetätigung, genauer gesagt der vom Primärkolben 112 zurückgelegte Weg, ermitteln. Das zu einem bestimmten Zeitpunkt erfasste Wertepaar aus vom Primärkolben 112 zurückgelegten Weg (wie aus dem Drehwinkel berechnet) einerseits und der diesem Weg entsprechenden Ausgangsspannung des Hall-Sensors 146C andererseits ermöglicht dann eine Weg-Kalibrierung des Hall-Sensors 146C gemäß Schritt 312, da das Magnetelement 146B den selben Weg wie der Primärkolben 112 zurücklegt. Die aus dieser Kalibrierung resultierende Kennlinie, die aus einer Vielzahl von entsprechenden Wertepaaren ermittelt wurde, ist in Fig. 7 dargestellt. Genauer gesagt zeigt Fig. 7 die Kennlinien zweier Hall-Sensoren 146C (da bei der Bremsanlage gemäß Fig. 2 aus Genauigkeitsgründen zwei in axialer Richtung versetzt angeordnete Hall-Sensoriken verbaut sind).

Fig. 7 veranschaulicht versetzt zueinander angeordneten Kennlinien, wie sie von der Kalibriereinrichtung 206 in Schritt 312 auf der Grundlage der von der Erfassungseinheit 204 pro Hall-Sensorik erfassten Wertepaaren ermittelt wurden. Die x-Achse entspricht dabei dem auf den vom Primärkolben 112 zurückgelegten Weg umgerechneten Signal des Drehwinkelsensors 144 in mm. Die y-Achse bezeichnet das Ausgangssignal des jeweiligen Hall-Sensors 146C in Volt. Deutlich zu erkennen ist die nicht-lineare Charakteristik des jeweiligen Ausgangsignals der Hall-Sensoren 146C, die herkömmlicherweise eine Kalibrierung erschwert.

Die in Fig. 7 fett eingezeichnete Referenzlinie bezeichnet den Teil der beiden Kennlinien, welcher jeweils einen annähernd linearen Verlauf aufweist. Die Referenzlinie wird für die Ermittlung des vom Bremspedal 130 zurückgelegten Betätigungswegs im BBW-Modus der Bremsanlage 100 herangezogen.

Da eine gewisse Hysterese der Hall-Sensoriken in Bezug auf eine Bewegung in Fig. 2 nach links einerseits und nach rechts andererseits nicht ausgeschlossen werden kann, können die in Fig. 7 dargestellten Schritte auch bei einem Rückhub des Primärkolbens 112 (in Fig. 2 von links nach rechts) durchgeführt werden, um separate Kennlinien für den Vor- sowie den Rückhub zu ermitteln. Der Primärkolben 112 sowie der Sekundärkolben 114 folgen dabei aufgrund der auf sie einwirkenden Federkräfte einer Bewegung der Spindel 138 in Fig. 2 nach rechts nach.

Es ist darauf hinzuweisen, dass das oben erläuterte Kalibrierverfahren auch bei der Bremsanlage 100 gemäß Fig. 1B eingesetzt werden kann. Zur Ermittlung des vom Primärkolben 112 (und damit dem mechanischen Aktuator 126) zurückgelegten Wegs auf der Grundlage des Ausgangssignals des Drehwinkelsensors 144 wäre dann noch zusätzlich das Übersetzungsverhältnis zwischen dem Kolben 702 sowie dem Primärkolben 112 zu berücksichtigen.

Das hier vorgestellte Kalibrierverfahren ermöglicht eine exakte Wegkalibrierung für den Hall-basierten Wegsensor 146 im Rahmen eines End-of-Line-Tests oder anderweitig. In gleicher Weise könnte eine Wegkalibrierung für den Kraftsensor 148 oder den Drucksensor 149 erfolgen. In der Praxis hat sich gezeigt, dass die Wegkalibrierung vor allem für Hall-Sensoriken aufgrund deren stark nicht-lineare Charakteristik vorteilhaft ist.

Ferner ermöglicht das hier beschriebene Kalibrierverfahren eine Kalibrierung des maximalen Kolbenhubs für jede Bremsanlage 100. Die Kalibrierung des Maximalhubs erfolgt durch Integration des Ausgangssignals des Drehwinkelsensors bei der Bewegung des Primärkolbens 112 zwischen seinen beiden Anschlägen. Der maximale Kolbenhub wird aus Gründen des Bauteilschutzes benötigt.

Es versteht sich, dass in abweichenden Ausführungsformen weitere oder andere Sensoriken kalibriert werden könnten. Ferner versteht sich, dass das hier vorgeschlagene Kalibrierverfahren auch zur Kalibrierung des Drehwinkelsensors 144 basierend auf dem Signal eines oder mehrerer der Sensoren 146, 148, 149 verwendet werden könnte. Auch ist darauf hinzuweisen, dass anstatt eines Drehwinkelsensors 144 auch andere oder zusätzliche Sensortypen zum Einsatz gelangen könnten, um eine Zustandsänderung des Aktuators 124 zu erfassen. Beispielhaft genannt sei ein Hall-Sensor zur Erfassung des Translationswegs der Spindel 138 oder ein Drucksensor im Zylinder 701, in der Fluidleitung 703 oder in der Eingangskammer 704 von Fig. 1B.

## Patentansprüche

1. Kalibrierverfahren für eine elektrohydraulische Kraftfahrzeug-Bremsanlage (100), die einen Kolben (112; 114) zum Aufbau eines Hydraulikdrucks in der Bremsanlage (100), einen ersten Aktuator (124) mit einem Elektromotor (134) und einen zweiten Aktuator (126) mit einer Bremspedalschnittstelle (173) umfasst, wobei der erste Aktuator (124) und der zweite Aktuator (126) den Kolben (112; 114) zu betätigen vermögen und wobei eine erste Sensorik (144) eine Zustandsänderung des ersten Aktuators (124) und eine zweite Sensorik (146; 148; 149) eine Zustandsänderung des zweiten Aktuators zu erfassen vermögen, das Verfahren umfassend:
Ansteuern des Elektromotors (134), um den Kolben (112; 114) mittels des ersten Aktuators (124) zu betätigen, wobei der zweite Aktuator (126) der Kolbenbetätigung folgt;
Erfassen, während der Kolbenbetätigung, eines von der ersten Sensorik (144) erzeugten ersten Signals, das einen Rückschluss auf ein Ausmaß der Kolbenbetätigung gestattet, sowie eines von der zweiten Sensorik (146; 148; 149) erzeugten zweiten Signals;
Kalibrieren des ersten Signals auf der Grundlage des zweiten Signals, oder umgekehrt.

2. Verfahren nach Anspruch 1, wobei
während des Ansteuerns des Elektromotors (134) eine Hilfskraft an den zweiten Aktuator (126) angelegt wird, unter welcher der zweite Aktuator (126) der Kolbenbetätigung folgt.

3. Verfahren nach einem der vorhergehenden Ansprüche,
wobei die Bremsanlage (100) in einem "Brake-By-Wire", BBW-, Modus betreibbar ist; und
in einem Kraftübertragungsweg zwischen der Bremspedalschnittstelle (173) und dem Kolben ein Spalt (190) vorgesehen oder vorsehbar ist, um den zweiten Aktuator (126) im BBW-Modus vom Kolben (112; 114) zu entkoppeln.

4. Verfahren nach den Ansprüchen 2 und 3, wobei
durch die Hilfskraft der Spalt (190) überwunden oder eine Ausbildung des Spalts (190) unterbunden wird.

5. Verfahren nach einem der vorhergehenden Ansprüche, wobei
eine Änderung des zweiten Signals erfasst wird; und
das Kalibrieren des zweiten Signals die Änderung des zweiten Signals auf das durch das erste Signal angegebene Ausmaß der Kolbenbetätigung bezieht; und/oder wobei das erste Signal eine im Wesentlichen lineare Charakteristik besitzt, das zweite Signal eine im Wesentlichen nicht-lineare Charakteristik besitzt und das zweite Signal auf der Grundlage des ersten Signals kalibriert wird.

6. Verfahren nach einem der vorhergehenden Ansprüche, wobei
der Kolben (112; 114) einen Maximalhub aufweist; und
der Elektromotor (134) angesteuert wird, damit der Kolben (112; 114) im Wesentlichen den Maximalhub ausführt; und/oder
wobei das erste Signal und das zweite Signal erfasst werden, während der Elektromotor (134) in zwei entgegengesetzte Richtungen angesteuert wird.

7. Verfahren nach einem der vorhergehenden Ansprüche, wobei der Elektromotor (134) ein bürstenloser Motor ist.

8. Verfahren nach einem der vorhergehenden Ansprüche, wobei
die erste Sensorik (144) wenigstens eine der folgenden Zustandsänderungen erfasst:
eine Zustandsänderung des Elektromotors (134);
eine Zustandsänderung einer von dem ersten Aktuator (124) umfassten Getriebekomponente (136), die funktional zwischen dem Elektromotor (134) und dem Kolben (112; 114) vorgesehen ist;
wobei die Zustandsänderung des Elektromotors (134) optional durch wenigstens einen der folgenden Parameter angegeben wird:
Drehwinkel des Elektromotors (134);
Anzahl von Umdrehungen des Elektromotors (134).

9. Verfahren nach einem der vorhergehenden Ansprüche, wobei
die zweite Sensorik einen Wegsensor (146) umfasst und der Wegsensor (146) kalibriert wird;
wobei der Wegsensor (146) optional wenigstens eines der folgenden Elemente umfasst:
einen Hall-Sensor (146C);
einen Magneten (146B);
ein Potentiometer.

10. Verfahren nach Anspruch 9, wobei
der Wegsensor (146) ausgelegt ist, einen Betätigungsweg des zweiten Aktuators (126) oder eines Teils (130) des zweiten Aktuators (146) zu erfassen;
wobei der zweite Aktuator (126) optional ein Bremspedal (130) umfasst und der Wegesensor (146) ausgelegt ist, einen Betätigungsweg des Bremspedals (130) zu erfassen.

11. Verfahren nach einem der vorhergehenden Ansprüche, wobei
die zweite Sensorik einen Drucksensor (149) umfasst und der Drucksensor (149) kalibriert wird;
wobei der zweite Aktuator (126) optional einen Hydraulikkreis umfasst und der Drucksensor (149) ausgebildet ist, einen Hydraulikdruck im Hydraulikkreis des zweiten Aktuators (126) zu erfassen.

12. Verfahren nach einem der vorhergehenden Ansprüche, wobei
die zweite Sensorik einen Kraftsensor (148) umfasst und der Kraftsensor (148) kalibriert wird;
wobei der Kraftsensor (148) optional dazu ausgebildet ist, eine von einem Fahrer an der Bremspedalschnittstelle (173) aufgebrachte Kraft zu erfassen.

13. Verfahren nach einem der vorhergehenden Ansprüche, wobei
das Verfahren vor einem Einbau der Bremsanlage (100) in ein Kraftfahrzeug durchgeführt wird; und/oder
wobei das Verfahren in einem hydraulikfluidlosen Zustand der Bremsanlage (100) durchgeführt wird.

14. Computerprogramm mit Programmcode zum Durchführen des Verfahrens nach einem der vorhergehenden Ansprüche, wenn das Computerprogramm von einer Computereinrichtung ausgeführt wird.

15. Kalibriervorrichtung (200) für eine elektrohydraulische Kraftfahrzeug-Bremsanlage (100), die einen Kolben (112; 114) zum Aufbau eines Hydraulikdrucks in der Bremsanlage (200), einen ersten Aktuator (124) mit einem Elektromotor (134) und einen zweiten Aktuator (126) mit einer Bremspedalschnittstelle (173) umfasst, wobei der erste Aktuator (124) und der zweite Aktuator (126) den Kolben (112; 114) zu betätigen vermögen und wobei eine erste Sensorik (144) eine Zustandsänderung des ersten Aktuators (124) und eine zweite Sensorik (146; 148; 149) eine Zustandsänderung des zweiten Aktuators (126) zu erfassen vermögen, die Vorrichtung (200) umfassend:
eine Ansteuereinheit (202), die ausgebildet ist zum Ansteuern des Elektromotors (134), um den Kolben (112; 114) mittels des ersten Aktuators (124) zu betätigen, wobei der zweite Aktuator (126) der Kolbenbetätigung folgt;
eine Erfassungseinheit (204), die ausgebildet ist zum Erfassen, während der Kolbenbetätigung, eines von der ersten Sensorik (144) erzeugten ersten Signals, das einen Rückschluss auf ein Ausmaß der Kolbenbetätigung gestattet, sowie eines von der zweiten Sensorik (146; 148; 149) erzeugten zweiten Signals;
eine Kalibriereinrichtung (206), die ausgebildet ist zum Kalibrieren des ersten Signals auf der Grundlage des zweiten Signals, oder umgekehrt.

## Claims

1. A calibration method for an electro-hydraulic motor vehicle brake system (100) which comprises a piston (112; 114) for building up a hydraulic pressure in the brake system (100), a first actuator (124) having an electric motor (134) and a second actuator (126) having a brake pedal interface (173), wherein the first actuator (124) and the second actuator (126) are capable of activating the piston (112; 114), and wherein a first sensor system (144) is capable of detecting a change in state of the first actuator (124), and a second sensor system (146; 148; 149) is capable of detecting a change in state of the second actuator, the method comprising:
actuating the electric motor (134) in order to activate the piston (112; 114) by means of the first actuator (124), wherein the second actuator (126) follows the piston activation;
detecting, during the piston activation, a first signal which is generated by the first sensor system (144) and permits a conclusion to be drawn about an extent of the piston activation, as well as a second signal which is generated by the second sensor system (146; 148; 149); and
calibrating the first signal on the basis of the second signal, or vice versa.

2. The method as claimed in claim 1, wherein
during the actuation of the electric motor (134) an auxiliary force is applied to the second actuator (126), under which auxiliary force the second actuator (126) follows the piston activation.

3. The method as claimed in one of the preceding claims,
wherein the brake system (100) can be operated in a "brake-by-wire", BBW, mode; and
a gap (190) is provided or can be provided in a force transmission path between the brake pedal interface (173) and the piston, in order to decouple the second actuator (126) from the piston (112; 114) in the BBW mode.

4. The method as claimed in claims 2 and 3, wherein
the gap (190) is overcome or formation of the gap (190) is prevented by means of the auxiliary force.

5. The method as claimed in one of the preceding claims, wherein
wherein a change in the second signal is detected; and
the calibration of the second signal relates the change in the second signal to the extent of the piston activation specified by the first signal; and/or
wherein the first signal has an essentially linear characteristic, the second signal has an essentially non-linear characteristic, and the second signal is calibrated on the basis of the first signal.

6. The method as claimed in one of the preceding claims, wherein
the piston (112; 114) has a maximum stroke; and
the electric motor (134) is actuated so that the piston (112; 114) essentially executes the maximum stroke; and/or
wherein the first signal and the second signal are detected, while the electric motor (134) is actuated in two opposite directions.

7. The method as claimed in one of the preceding claims, wherein
the electric motor (134) is a brushless motor.

8. The method as claimed in one of the preceding claims, wherein
the first sensor system (144) detects at least one of the following changes in state:
a change in state of the electric motor (134);
a change in state of a transmission component (136) which is included in the first actuator (124) and is functionally provided between the electric motor (134) and the piston (112; 114);
wherein, optionally, the change in state of the electric motor (134) is specified by at least one of the following parameters:
rotational angle of the electric motor (134);
number of revolutions of the electric motor (134).

9. The method as claimed in one of the preceding claims, wherein
the second sensor system comprises a travel sensor (146), and the travel sensor (146) is calibrated;
wherein the travel sensor (146) comprises at least one of the following elements:
a Hall sensor (146C);
a magnet (146B);
a potentiometer.

10. The method as claimed in claim 9, wherein
the travel sensor (146) is configured to detect actuation travel of the second actuator (126) or of a part (130) of the second actuator (146);
wherein, optionally, the second actuator (126) comprises a brake pedal (130), and the travel sensor (146) is configured to detect actuation travel of the brake pedal (130).

11. The method as claimed in one of the preceding claims, wherein
the second sensor system comprises a pressure sensor (149), and the pressure sensor (149) is calibrated;
wherein, optionally, the second actuator (126) comprises a hydraulic circuit, and the pressure sensor (149) is designed to detect a hydraulic pressure in the hydraulic circuit of the second actuator (126).

12. The method as claimed in one of the preceding claims, wherein
the second sensor system comprises a force sensor (148), and the force sensor (148) is calibrated.;
wherein, optionally, the force sensor (148) is designed to detect a force which is applied to the brake pedal interface (173) by a driver.

13. The method as claimed in one of the preceding claims, wherein
the method is carried out before the brake system (100) is installed in a motor vehicle; and/or
wherein the method is carried out in a state of the brake system (100) which is devoid of hydraulic fluid.

14. A computer program having program code for carrying out the method as claimed in one of the preceding claims when the computer program is executed by a computer device.

15. A calibration device (200) for an electro-hydraulic motor vehicle brake system (100) which comprises a piston (112; 114) for building up a hydraulic pressure in the brake system (100), a first actuator (124) having an electric motor (134) and a second actuator (126) having a brake pedal interface (173), wherein the first actuator (124) and the second actuator (126) are capable of activating the piston (112; 114), and wherein a first sensor system (144) is capable of detecting a change in state of the first actuator (124), and a second sensor system (146; 148; 149) is capable of detecting a change in state of the second actuator (126), the device (200) comprising:
an actuation unit (202) which is designed to actuate the electric motor (134) in order to activate the piston (112; 114) by means of the first actuator (124), wherein the second actuator (126) follows the piston activation;
a detection unit (204) which is designed to detect, during the piston activation, a first signal which is generated by the first sensor system (144) and permits a conclusion to be drawn about an extent of the piston activation, as well as a second signal which is generated by the second sensor system (146; 148; 149);
a calibration apparatus (206) which is designed to calibrate the first signal on the basis of the second signal, or vice versa.

## Revendications

1. Procédé d'étalonnage d'un système de freinage électrohydraulique pour véhicule automobile (100), comprenant un piston (112 ; 114) pour créer une pression hydraulique dans le système de freinage (100), un premier actionneur (124) doté d'un moteur électrique (134) et un second actionneur (126) doté d'une interface de pédale de frein (173), dans lequel le premier actionneur (124) et le second actionneur (126) peuvent actionner le piston (112 ; 114), et dans lequel un premier système de capteurs (144) peut détecter le changement d'état du premier actionneur (124) et un second système de capteurs (146 ; 148 ; 149) peut détecter le changement d'état du second actionneur, le procédé comprenant :
la commande du moteur électrique (134) destiné à actionner le piston (112 ; 114) moyennant le premier actionneur (124), le second actionneur (126) suivant le déplacement du piston ;
la détection, pendant le déplacement du piston, d'un premier signal émis par le système de capteurs (144), qui permet de déduire la longueur de la course du piston, ainsi que d'un second signal émis par le second système de capteurs (146 ; 148 ; 149);
l'étalonnage du premier signal sur la base du second, ou inversement.

2. Procédé selon la revendication 1,
dans lequel, pendant la commande du moteur électrique (134), une force auxiliaire est appliquée au second actionneur (126), sous l'action de laquelle le second actionneur (126) suit le déplacement du piston.

3. Procédé selon l'une des revendications précédentes,
dans lequel le système de freinage (100) peut fonctionner en mode « brake by wire » ou BB ; et
dans lequel une fente (190) est ou peut être prévue sur un trajet de transmission de la force entre l'interface de pédale de frein (173) et le piston, afin de désac-coupler le second actionneur (126) du piston (112 ; 114) en mode BBW.

4. Procédé selon les revendications 2 et 3,
dans lequel moyennant la force auxiliaire la fente (190) peut être franchie ou la formation de la fente (190) est empêchée.

5. Procédé selon l'une des revendications précédentes, dans lequel
une modification du second signal est détectée ; et
l'étalonnage du second signal met la modification du second signal en rapport avec la longueur de la course du piston indiquée par le premier signal ; et/ou
dans lequel le premier signal possède une courbe caractéristique notamment linéaire, le second signal possède une courbe caractéristique notamment non linéaire et le second signal est étalonné sur la base du premier signal.

6. Procédé selon l'une des revendications précédentes, dans lequel
le piston (112 ; 114) présente une course maximale ; et
le moteur électrique (134) est commandé afin que le piston (112 ; 114) effectue notamment la course maximale ; et/ou
dans lequel le premier signal et le second signal sont détectés pendant que le moteur électrique (134) est commandé dans deux sens différents.

7. Procédé selon l'une des revendications précédentes,
dans lequel le moteur électrique (134) est un moteur sans balais.

8. Procédé selon l'une des revendications précédentes, dans lequel
le premier système de capteurs (144) détecte au moins l'un des changements d'état suivant :
un changement d'état du moteur électrique (134) ;
un changement d'état d'un composant de transmission (136) faisant partie du premier actionneur (124), qui est prévu pour des raisons fonctionnelles entre le moteur électrique (134) et le piston (112 ; 114) ;
dans lequel le changement d'état du moteur électrique (134) est indiqué en option par au moins l'un des paramètres suivants :
l'angle de rotation du moteur électrique (134) ;
le nombre de tours du moteur électrique (134).

9. Procédé selon l'une des revendications précédentes, dans lequel
le second système de capteurs comprend un capteur de déplacement (146) et le capteur de déplacement (146) est étalonné ;
dans lequel le capteur de déplacement (146) comprend en option au moins l'un des éléments suivants :
un capteur à effet Hall (146C) ;
un aimant (146B) ;
un potentiomètre.

10. Procédé selon la revendication 9, dans lequel
le capteur de déplacement (146) est conçu pour détecter une course d'actionnement du second actionneur (126) ou d'une partie (130) du second actionneur (126) ;
dans lequel le second actionneur (126) comporte en option une pédale de frein (130) et le capteur de déplacement (146) est conçu pour détecter une course d'actionnement de la pédale de frein (130).

11. Procédé selon l'une des revendications précédentes, dans lequel
le second système de capteurs comprend un capteur de pression (149) et le capteur de pression (149) est étalonné ;
dans lequel le second actionneur (126) comporte en option un circuit hydraulique et le capteur de pression (149) est conçu pour détecter une pression hydraulique dans le circuit hydraulique du second actionneur (126).

12. Procédé selon l'une des revendications précédentes, dans lequel
le second système de capteurs comprend un capteur de force (148) et le capteur de force (148) est étalonné ;
dans lequel le capteur de force (148) est conçu en option de manière à détecter une force exercée par le conducteur sur l'interface de pédale de frein (173).

13. Procédé selon l'une des revendications précédentes, dans lequel
le procédé est mis en œuvre avant que le système de freinage (100) ne soit installé dans un véhicule automobile ; et/ou
dans lequel le procédé est mis en œuvre alors que le système de freinage (100) ne contient pas de fluide hydraulique.

14. Programme informatique avec un code de programmation pour mettre en oeuvre le procédé selon l'une des revendications précédentes lorsque le programme informatique est exécuté par un ordinateur.

15. Dispositif d'étalonnage (200) pour un système de freinage (100) électrohydraulique pour véhicule automobile, comprenant un piston (112 ; 114) destiné à créer une pression hydraulique dans le système de freinage (100), un premier actionneur (124) doté d'un moteur électrique (134) et un second actionneur (126) doté d'une interface de pédale de frein (173), dans lequel le premier actionneur (124) et le second actionneur (126) peuvent actionner le piston (112 ; 114), et dans lequel un premier système de capteurs (144) peut détecter un changement d'état du premier actionneur (124) et un second système de capteurs (146 ; 148 ; 149) peut détecter un changement d'état du second actionneur (126), le dispositif (200) comprenant :
une unité de commande (202) conçue pour commander le moteur électrique (134) afin d'actionner le piston (112 ; 114) au moyen du premier actionneur (124), le second actionneur (126) suivant le déplacement du piston ;
une unité de détection (204) conçue pour détecter, pendant le déplacement du piston, un premier signal émis par le premier système de capteurs (144), qui permet de déduire la longueur de la course du piston, ainsi qu'un second signal émis par le second système de capteurs (146 ; 148 ; 149) ;
un dispositif d'étalonnage (206) conçu pour étalonner le premier signal sur la base du second signal, ou inversement.
